# EUROPEAN PATENT APPLICATION

(11) **EP 4 068 558 A1**
(43) Date of publication of application: **05.10.2022**
(21) Application number: 20914162.1
(22) Date of filing: 11.11.2020
(51) Int. Cl.: H02J 7/00

(54) **CHARGING METHOD AND APPARATUS AND CHARGING DEVICE**

(30) Priority: 15.01.2020 CN 202010042304
(71) Applicant: Huawei Technologies Co., Ltd., Shenzhen, Guangdong 518129, (CN)
(72) Inventor: MA, Liqiang, Shenzhen, Guangdong 518129 (CN)
(74) Representative: Pfenning, Meinig & Partner mbB
(86) International application number: PCT/CN2020/128062
(87) International publication number: WO 2021/143322

(57) **Abstract**

Embodiments of this application provide a charging method and apparatus and a charging device. In the charging method, the charging device may determine maximum output power of the charging device based on an in-position status of an adapter of the charging device, determine reserved power of the charging device based on a usage status of the charging device, then, determine available charging power of the charging device based on the maximum output power and the reserved power, next, allocate, based on priorities of charging ports, connected to electronic devices, of the charging device of the charging device, the available charging power of the charging device to the charging ports, connected to the electric devices, of the charging device, and finally, control the charging port, connected to the electronic device, of the of the charging device to charge the connected electronic device based on allocated power. Therefore, charging power of each charging port can be adjusted based on the priority of each charging port of the charging device, so that external charging efficiency of the charging device is maximized, and charging efficiency of the charging device is improved.

## Description

This application claims priority to Chinese Patent Application No. 202010042304.X, filed with the Chinese Patent Office on January 15, 2020 and entitled "CHARGING METHOD AND APPARATUS AND CHARGING DEVICE", which is incorporated herein by reference in its entirety.

### TECHNICAL FIELD

This application relates to the field of artificial intelligence technologies, and in particular, to a charging method and apparatus and a charging device.

### BACKGROUND

A relatively powerful device with a charging function in the current market, for example, a mobile power pack, generally supports both wired external charging and wireless external charging at the same time. Wired external charging is to charge an electronic device through a USB-type charging port A (hereinafter referred to as a port A) or a USB-type charging port C (hereinafter referred to as a port C), and in addition, the port C supports charging of the device. How to effectively allocate power in various charging scenarios to bring better charging experience to a user is very important.

In a related conventional technology, when a mobile power pack has multiple concurrent outputs, output power is generally allocated according to a fixed rule. For example, when a port A and a port C are simultaneously used for external charging, both the port A and the port C are used for external charging based on predefined power. As a result, external output power cannot be maximized, and charging efficiency is poor.

### SUMMARY

This application provides a charging method and apparatus and a charging device, and this application further provides a computer-readable storage medium, to adjust charging power of each charging port of the charging device, so that external output power of the charging device is maximized.

According to a first aspect, this application provides a charging method, including:
obtaining an in-position status of an adapter of a charging device and a usage status of the charging device, where in this embodiment, the charging device may be a device with a charging function, for example, a mobile power pack; the in-position status of the adapter of the charging device may include: The adapter of the charging device is in position or the adapter of the charging device is not in position; that the adapter of the charging device is in position means that the adapter of the charging device is connected to a power supply, and the charging device charges the charging device by using the adapter; and that the adapter of the charging device is not in position means that the adapter of the charging device is not connected to a power supply;
determining maximum output power of the charging device based on the in-position status of the adapter, and determining reserved power of the charging device based on the usage status of the charging device, where in this embodiment, the reserved power of the charging device is power reserved by the charging device for use by the charging device (for example, mobile Wi-Fi), the reserved power of the charging device may be determined based on the usage status of the charging device, and the usage status of the charging device may include a power-on state or standby state of the charging device;
determining available charging power of the charging device based on the maximum output power of the charging device and the reserved power of the charging device, where, specifically, the available charging power of the charging device may be a difference between the maximum output power of the charging device and the reserved power of the charging device, that is, P_{RMNG} = P_{MAX} - P_{RSVD}, where P_{RMNG} is the available charging power of the charging device, and P_{RSVD} is the reserved power of the charging device;
obtaining a connection status between a charging port of the charging device and an electronic device, where the electronic device includes a device that is charged by using the charging device, for example, a device such as a smartphone, a smartwatch, a tablet computer, a smart wearable device, or a smart screen; specifically, the obtaining a connection status between a charging port of the charging device and an electronic device may be understood as obtaining whether the charging port of the charging device is connected to the electronic device;
allocating, based on priorities of charging ports, connected to electronic devices, of the charging device of the charging device, the available charging power of the charging device to the charging ports, connected to the electronic devices, of the charging device; and
controlling the charging port, connected to the electronic device, of the charging device to charge the connected electronic device based on allocated power.

In the foregoing charging method, after the in-position status of the adapter of the charging device and the usage status of the charging device are obtained, the charging device may determine the maximum output power of the charging device based on the in-position status of the adapter, determine the reserved power of the charging device based on the usage status of the charging device, then, determine the available charging power of the charging device based on the maximum output power of the charging device and the reserved power of the charging device, next, obtain the connection status between the charging port of the charging device and the electronic device, allocate, based on the priorities of the charging ports, connected to the electronic devices, of the charging device, the available charging power of the charging device to the charging ports, connected to the electric devices, of the charging device, and finally, control the charging port, connected to the electronic device, of the charging device to charge the connected electronic device based on the allocated power. Therefore, charging power of each charging port can be adjusted based on the priority of each charging port of the charging device, so that external charging efficiency of the charging device is maximized, and charging efficiency of the charging device is improved.

In a possible implementation, the determining maximum output power of the charging device based on the in-position status of the adapter includes:
when the adapter is in position, determining that the maximum output power of the charging device is a sum of input power of the adapter and power provided by the charging device, that is, P_{MAX} is equal to the input power of the adapter plus P_{BAT}; and
when the adapter is not in position, determining that the maximum output power of the charging device is the power provided by the charging device, that is, P_{MAX} = P_{BAT}.

In a possible implementation, the allocating, based on priorities of charging ports, connected to electronic devices, of the charging device, the available charging power of the charging device to the charging ports, connected to the electronic devices, of the charging device includes:
determining a first power range based on minimum power required by a highest-priority charging port in the charging ports, connected to the electronic devices, of the charging device, the available charging power of the charging device, and minimum power required by a charging port whose priority is lower than the highest priority; and
allocating first charging power in the first power range to the highest-priority charging port.

Specifically, the allocating first charging power in the first power range to the highest-priority charging port may be understood as: negotiating, in the first power range based on the highest-priority charging port, charging power between the charging device and the electronic device, to select a mutually supported maximum charging level, and allocating successfully negotiated power to the highest-priority charging port as the first charging power.

In a possible implementation, after the allocating first charging power in the first power range to the highest-priority charging port, the method further includes:
determining a second power range based on minimum power required by a second-highest-priority charging port in the charging ports, connected to the electronic devices, of the charging device, the available charging power of the charging device, the first charging power, and minimum power required by a charging port whose priority is lower than the second highest priority; and
allocating second charging power in the second power range to the second-highest-priority charging port.

Specifically, the allocating second charging power in the second power range to the second-highest-priority charging port may be understood as: negotiating, in the second power range based on the second-highest-priority charging port, charging power between the charging device and the electronic device, to select a mutually supported maximum charging level, and allocating successfully negotiated power to the second-highest-priority charging port as the second charging power.

In a possible implementation, after the allocating second charging power in the second power range to the second-highest-priority charging port, the method further includes:
determining a third power range based on minimum power required by a lowest-priority charging port in the charging ports, connected to the electronic devices, of the charging device, the available charging power of the charging device, the first charging power, and the second charging power; and
allocating third charging power in the third power range to the lowest-priority charging port.

Specifically, the allocating third charging power in the third power range to the lowest-priority charging port may be understood as: negotiating, in the third power range based on the lowest-priority charging port, charging power between the charging device and the electronic device, to select a mutually supported maximum charging level, and allocating successfully negotiated power to the lowest-priority charging port as the third charging power.

In a possible implementation, after the obtaining a usage status of the charging device, the method further includes:
after an abnormal event occurs on the charging device, controlling the charging device to stop charging the connected electronic device, where the abnormal event includes one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state. The predetermined power level threshold may be customized during a specific implementation, and a value of the predetermined power level threshold is not limited in this embodiment.

According to a second aspect, an embodiment of this application provides a charging apparatus, disposed in a charging device, where the charging apparatus includes:
an obtaining module, configured to obtain an in-position status of an adapter of the charging device and a usage status of the charging device;
a determining module, configured to: determine maximum output power of the charging device based on the in-position status of the adapter, determine reserved power of the charging device based on the usage status of the charging device, and determine available charging power of the charging device based on the maximum output power of the charging device and the reserved power of the charging device, where
the obtaining module is further configured to obtain a connection status between a charging port of the charging device and an electronic device;
an allocation module, configured to allocate, based on priorities of charging ports, connected to electronic devices, of the charging device, the available charging power of the charging device to the charging ports, connected to the electronic devices, of the charging device; and
a control module, configured to control the charging port, connected to the electronic device, of the charging device to charge the connected electronic device based on allocated power.

In a possible implementation, the determining module is specifically configured to: when the adapter is in position, determine that the maximum output power of the charging device is a sum of input power of the adapter and power provided by the charging device; and when the adapter is not in position, determine that the maximum output power of the charging device is the power provided by the charging device.

In a possible implementation, the allocation module includes:
a power range determining submodule, configured to determine a first power range based on minimum power required by a highest-priority charging port in the charging ports, connected to the electronic devices, of the charging device, the available charging power of the charging device, and minimum power required by a charging port whose priority is lower than the highest priority; and
a power allocation submodule, configured to allocate first charging power in the first power range to the highest-priority charging port.

In a possible implementation, the power range determining submodule is further configured to: after the power allocation submodule allocates the first charging power in the first power range to the highest-priority charging port, determine a second power range based on minimum power required by a second-highest-priority charging port in the charging ports, connected to the electronic devices, of the charging device, the available charging power of the charging device, the first charging power, and minimum power required by a charging port whose priority is lower than the second highest priority; and
the power allocation submodule is further configured to allocate second charging power in the second power range to the second-highest-priority charging port.

In a possible implementation, the power range determining submodule is further configured to: after the power allocation submodule allocates the second charging power in the second power range to the second-highest-priority charging port, determine a third power range based on minimum power required by a lowest-priority charging port in the charging ports, connected to the electronic devices, of the charging device, the available charging power of the charging device, the first charging power, and the second charging power; and
the power allocation submodule is further configured to allocate third charging power in the third power range to the lowest-priority charging port.

In a possible implementation, the control module is further configured to: after the obtaining module obtains the usage status of the charging device, and an abnormal event occurs on the charging device, control the charging device to stop charging the connected electronic device, where the abnormal event includes one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

According to a third aspect, an embodiment of this application provides a charging device, including:
one or more processors, a memory, a plurality of applications, and one or more computer programs, where the one or more computer programs are stored in the memory, the one or more computer programs include instructions, and when the instructions are executed by the device, the device is enabled to perform the following steps:
   obtaining an in-position status of an adapter of the charging device and a usage status of the charging device;
   determining maximum output power of the charging device based on the in-position status of the adapter, and determining reserved power of the charging device based on the usage status of the charging device;
   determining available charging power of the charging device based on the maximum output power of the charging device and the reserved power of the charging device;
   obtaining a connection status between a charging port of the charging device and an electronic device;
   allocating, based on priorities of charging ports, connected to electronic devices, of the charging device, the available charging power of the charging device to the charging ports, connected to the electronic devices, of the charging device; and
   controlling the charging port, connected to the electronic device, of the charging device to charge the connected electronic device based on allocated power.

In a possible implementation, when the instructions are executed by the device, that the device is enabled to perform the step of determining maximum output power of the charging device based on the in-position status of the adapter includes:
when the adapter is in position, determining that the maximum output power of the charging device is a sum of input power of the adapter and power provided by the charging device; and
when the adapter is not in position, determining that the maximum output power of the charging device is the power provided by the charging device.

In a possible implementation, when the instructions are executed by the device, that the device is enabled to perform the step of allocating, based on priorities of charging ports, connected to electronic devices, of the charging device, the available charging power of the charging device to the charging ports, connected to the electronic devices, of the charging device includes:
determining a first power range based on minimum power required by a highest-priority charging port in the charging ports, connected to the electronic devices, of the charging device, the available charging power of the charging device, and minimum power required by a charging port whose priority is lower than the highest priority; and
allocating first charging power in the first power range to the highest-priority charging port.

In a possible implementation, when the instructions are executed by the device, after the device is enabled to perform the step of allocating first charging power in the first power range to the highest-priority charging port, the device further performs the following steps:
determining a second power range based on minimum power required by a second-highest-priority charging port in the charging ports, connected to the electronic devices, of the charging device, the available charging power of the charging device, the first charging power, and minimum power required by a charging port whose priority is lower than the second highest priority; and
allocating second charging power in the second power range to the second-highest-priority charging port.

In a possible implementation, when the instructions are executed by the device, after the device is enabled to perform the step of allocating second charging power in the second power range to the second-highest-priority charging port, the device further performs the following steps:
determining a third power range based on minimum power required by a lowest-priority charging port in the charging ports, connected to the electronic devices, of the charging device, the available charging power of the charging device, the first charging power, and the second charging power; and
allocating third charging power in the third power range to the lowest-priority charging port.

In a possible implementation, when the instructions are executed by the device, after the device is enabled to perform the step of obtaining a usage status of the charging device, the device further performs the following step:
after an abnormal event occurs on the charging device, controlling the charging device to stop charging the connected electronic device, where the abnormal event includes one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

It should be understood that, technical solutions in the second to the third aspects of this application are consistent with technical solutions in the first aspect. Beneficial effects achieved by the various aspects and corresponding feasible implementations are similar, and details are not described again.

According to a fourth aspect, this application provides a computer-readable storage medium, wherethe computer-readable storage medium stores a computer program, and when the computer program runs on a computer, the computer is enabled to perform the method according to the first aspect.

According to a fifth aspect, this application provides a computer program, where when the computer program is executed by a computer, the computer program is used to perform the method according to the first aspect.

In a possible design, all or some of the programs in the fifth aspect may be stored in a storage medium encapsulated with a processor, or some or all of the programs may be stored in a memory that is not encapsulated with a processor.

### BRIEF DESCRIPTION OF DRAWINGS

FIG. 1 is a flowchart of a charging method according to an embodiment of this application;
FIG. 2 is a flowchart of a charging method according to another embodiment of this application;
FIG. 3 is a flowchart of a charging method according to another embodiment of this application;
FIG. 4 is a schematic structural diagram of a charging apparatus according to an embodiment of this application;
FIG. 5 is a schematic structural diagram of a charging apparatus according to another embodiment of this application; and
FIG. 6 is a schematic structural diagram of a charging device according to an embodiment of this application.

### DESCRIPTION OF EMBODIMENTS

Terms used in implementations of this application are merely intended to explain specific embodiments of this application, and are not intended to limit this application.

In a related conventional technology, when a charging device (for example, a mobile power pack) has multiple concurrent outputs, output power is generally allocated according to a fixed rule. For example, when a USB-type A and a USB-type C are simultaneously used for power supply, both the port A and the port C are used for external charging based on predefined power. As a result, external output power cannot be maximized, and charging efficiency is poor.

The charging device is a device with a charging function.

Therefore, this application provides a charging method, to adjust charging power of each charging port based on a priority of each charging port of the charging device, so that the external output power of the charging device is maximized.

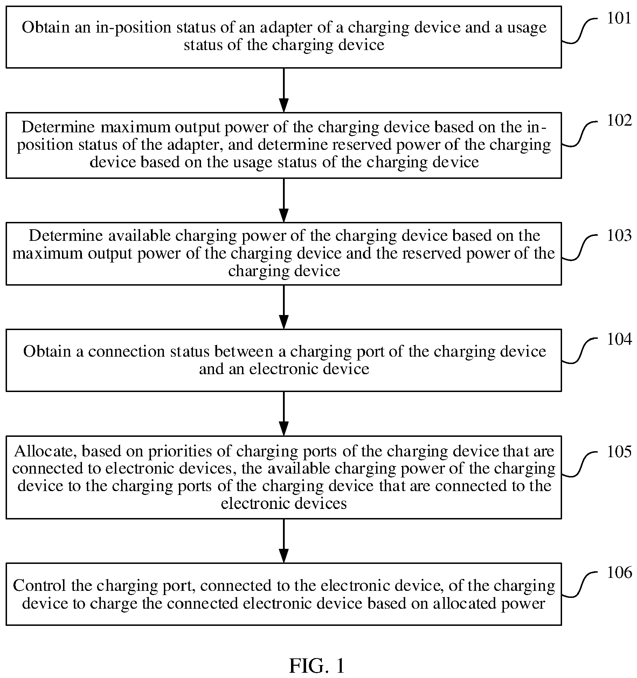

FIG. 1 is a flowchart of a charging method according to an embodiment of this application. As shown in FIG. 1, the charging method includes the following steps.

Step 101: Obtain an in-position status of an adapter of a charging device and a usage status of the charging device.

In this embodiment, the charging device may be a device with a charging function, for example, a mobile power pack. The in-position status of the adapter of the charging device may include: The adapter of the charging device is in position or the adapter of the charging device is not in position; that the adapter of the charging device is in position means that the adapter of the charging device is connected to a power supply, and the charging device charges the charging device by using the adapter; and that the adapter of the charging device is not in position means that the adapter of the charging device is not connected to a power supply.

Step 102: Determine maximum output power of the charging device based on the in-position status of the adapter, and determine reserved power of the charging device based on the usage status of the charging device.

Specifically, determining the maximum output power of the charging device based on the in-position status of the adapter may be understood as:
when the adapter is in position, determining that the maximum output power of the charging device is a sum of input power of the adapter and power provided by the charging device, that is, P_{MAX} is equal to the input power of the adapter plus P_{BAT}; and
when the adapter is not in position, determining that the maximum output power of the charging device is the power provided by the charging device, that is, P_{MAX} = P_{BAT,where}

P_{MAX} is the maximum output power of the charging device, and P_{BAT} is the power provided by the charging device.

In this embodiment, the reserved power of the charging device is power reserved by the charging device for use by the charging device (for example, mobile Wi-Fi), the reserved power of the charging device may be determined based on the usage status of the charging device, and the usage status of the charging device may include a power-on state or standby state of the charging device.

Step 103: Determine available charging power of the charging device based on the maximum output power of the charging device and the reserved power of the charging device.

Specifically, the available charging power of the charging device may be a difference between the maximum output power of the charging device and the reserved power of the charging device, that is, P_{RMNG} = P_{MAX} - P_{RSVD}, where P_{RMNG} is the available charging power of the charging device, and P_{RSVD} is the reserved power of the charging device.

Step 104: Obtain a connection status between a charging port of the charging device and an electronic device.

The electronic device includes a device that is charged by using the charging device, for example, a device such as a smartphone, a smartwatch, a tablet computer, a smart wearable device, or a smart screen.

Specifically, obtaining the connection status between the charging port of the charging device and the electronic device may be understood as obtaining whether the charging port of the charging device is connected to the electronic device.

Step 105: Allocate, based on priorities of charging ports, connected to electronic devices, of the charging device, the available charging power of the charging device to the charging ports, connected to the electronic devices, of the charging device.

Step 106: Control the charging port, connected to the electronic device, of the charging device to charge the connected electronic device based on allocated power.

In the foregoing charging method, after the in-position status of the adapter of the charging device and the usage status of the charging device are obtained, the charging device may determine the maximum output power of the charging device based on the in-position status of the adapter, determine the reserved power of the charging device based on the usage status of the charging device, then, determine the available charging power of the charging device based on the maximum output power of the charging device and the reserved power of the charging device, next, obtain the connection status between the charging port of the charging device and the electronic device, allocate, based on the priorities of the charging ports, connected to the electronic devices, of the charging device, the available charging power of the charging device to the charging ports, connected to the electric devices, of the charging device, and finally, control the charging port, connected to the electronic device, of the charging device to charge the connected electronic device based on the allocated power. Therefore, charging power of each charging port can be adjusted based on the priority of each charging port of the charging device, so that external charging efficiency of the charging device is maximized, and charging efficiency of the charging device is improved.

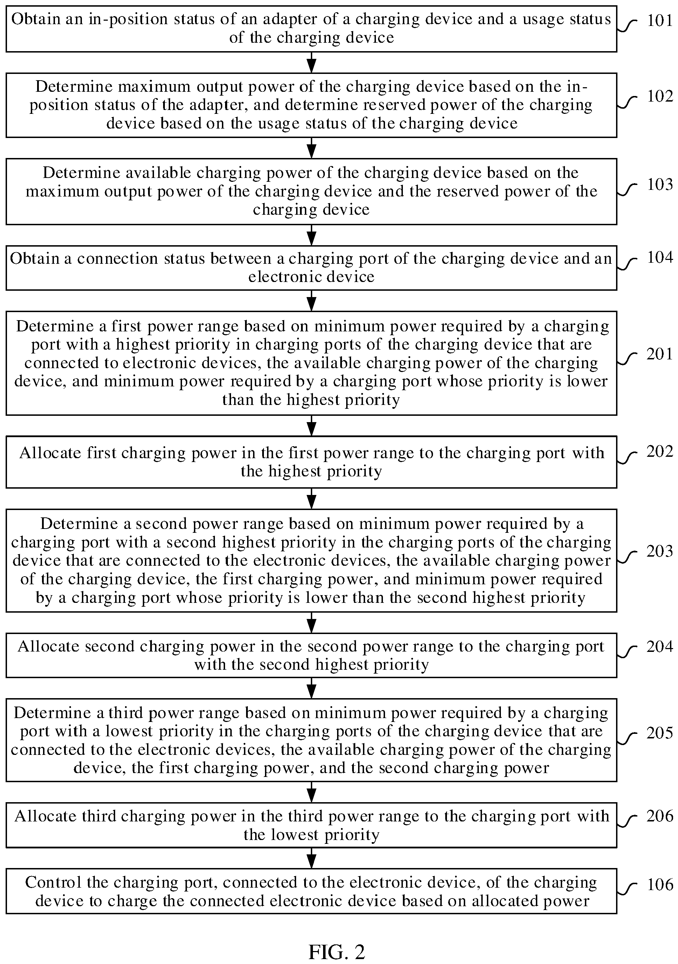

FIG. 2 is a flowchart of a charging method according to another embodiment of this application. As shown in FIG. 2, in the embodiment shown in FIG. 1 of this application, step 105 may include the following steps.

Step 201: Determine a first power range based on minimum power required by a highest-priority charging port in the charging ports, connected to the electronic devices, of the charging device, the available charging power of the charging device, and minimum power required by a charging port whose priority is lower than the highest priority.

Step 202: Allocate first charging power in the first power range to the highest-priority charging port.

Specifically, allocating the first charging power in the first power range to the highest-priority charging port may be understood as: negotiating, in the first power range based on the highest-priority charging port, charging power between the charging device and the electronic device, to select a mutually supported maximum charging level, and allocating successfully negotiated power to the highest-priority charging port as the first charging power.

Further, after step 202, the method may further include the following steps:

Step 203: Determine a second power range based on minimum power required by a second-highest-priority charging port in the charging ports, connected to the electronic devices, of the charging device, the available charging power of the charging device, the first charging power, and minimum power required by a charging port whose priority is lower than the second highest priority.

Step 204: Allocate second charging power in the second power range to the second-highest-priority charging port.

Specifically, allocating the second charging power in the second power range to the second-highest-priority charging port may be understood as: negotiating, in the second power range based on the second-highest-priority charging port, charging power between the charging device and the electronic device, to select a mutually supported maximum charging level, and allocating successfully negotiated power to the second-highest-priority charging port as the second charging power.

Further, after step 204, the method may further include the following steps:

Step 205: Determine a third power range based on minimum power required by a lowest-priority charging port in the charging ports, connected to the electronic devices, of the charging device, the available charging power of the charging device, the first charging power, and the second charging power.

Step 206: Allocate third charging power in the third power range to the lowest-priority charging port.

Specifically, allocating the third charging power in the third power range to the lowest-priority charging port may be understood as: negotiating, in the third power range based on the lowest-priority charging port, charging power between the charging device and the electronic device, to select a mutually supported maximum charging level, and allocating successfully negotiated power to the lowest-priority charging port as the third charging power.

In this embodiment, the charging device may include three charging ports: a port A, a port C, and a wireless charging port. Priorities of the three charging ports may be set based on a sequence of connecting the charging ports to electronic devices. For example, it is assumed that the port A is first connected to an electronic device. In other words, the port A is first accessed by an electronic device. The priority of the port A may be set to be the highest. Alternatively, the priorities of the three charging ports may be preset. For example, it may be preset that the priority of the port C is the highest, the priority of the port A is the second highest, and the priority of the wireless charging port is the lowest. A priority setting rule of the charging ports of the charging device is not limited in this embodiment. The following uses preset priorities of the charging ports as an example for description.

(1) When the adapter is in position, the charging device charges the charging device by using the port C, and the remaining port A and wireless charging port may be used for external charging. In this case, to ensure external charging efficiency of the charging device, if input power of the adapter does not meet maximum power required for external charging, power is preferentially obtained from a battery of the charging device to perform external charging. In this case, maximum output power of the charging device P_{MAX} is equal to the input power of the adapter plus P_{BAT}. After the maximum power required for external charging is subtracted from the maximum output power of the charging device, if there is remaining power, the battery of the charging device is charged by using the remaining power. When the adapter is in position, the port A is a highest-priority charging port, and the wireless charging port is a second-highest-priority charging port, and is also a charging port whose priority is lower than a highest priority. A manner in which the available charging power of the charging device is allocated to the charging ports of the charging device may be as follows:
Maximum charging power supported by the port A is selected for the port A within a range of [P_{AMIN}, (P_{RMNG} - P_{WMIN})]; and
Maximum charging power supported by the wireless charging port is selected for the wireless charging port within a range of [P_{WMIN}, (P_{RMNG} - P_{ADST})], where
P_{AMIN} is minimum power required by the port A, P_{RMNG} is the available charging power of the charging device, P_{WMIN} is minimum power required by the wireless charging port, [P_{AMIN}, (P_{RMNG} - P_{WMIN})] is a first charging range, and P_{ADST} is finally allocated maximum charging power when the port A is used for external charging, namely, first charging power; and [P_{WMIN}, (P_{RMNG} - P_{ADST})] is a second charging range, and when the wireless charging port is used for external charging, finally allocated maximum charging power is second charging power.

For example, when the adapter is in position, the port A and the wireless charging port are used for external charging at the same time, and P_{BAT} = 30.4 W. When power is allocated to the port A and the wireless charging port, to be compatible with a 5 V/1 A adapter, a specific power allocation manner may be shown in Table 1.

**Table 1**

| The adapter is in position. (It is assumed that inputs of the adapter are 9 V/2 A, PBAT = 30.4 W, PRSVD = 2 W, and PRMNG = 28.4 W.) | | | |
|---|---|---|---|
| It is assumed that the port A has the highest priority and the wireless charging port has the second highest priority. | External charging through the port A (supported charging levels: 5 V/4.5 A, 9 V 2 A, 5 V/2 A, and 5 V/1 A) | External charging through the wireless charging port (supported charging levels: 15 W, 10 W, 7.5 W, and 5 W) | Effective power (W) output by the charging device |
| A predetermined rule (compatible with the 5 V/1 A adapter) | 5 V/4.5 A | 10W | 32.5 |
| A power allocation result according to an existing predetermined rule | 5 V/4.5 A | 10W | 32.5 |
| A power allocation result in this application | 5 V/4.5 A | Based on the power allocation manner in this application, the maximum charging power supported by the port A is selected within a range of [5, 28.4 + 18 - 22.5]. In other words, 15 W is selected in (15 W, 10 W, 7.5 W, and 5 W) as | 37.5 |
| The adapter is in position. (It is assumed that inputs of the adapter are 9 V/2 A, PBAT = 30.4 W, PRSVD = 2 W, and PRMNG = 28.4 W.) | | | |
| | | the maximum charging power. | |

It can be learned from Table 1 that, when power is allocated according to the existing predetermined rule, the effective power output by the charging device is 32.5 W, but after the power is allocated based on the method provided in this application, the effective power output by the charging device is 37.5 W. Therefore, charging power of each charging port is adjusted based on a priority of the charging port of the charging device, so that external charging efficiency of the charging device is maximized, and charging efficiency of the charging device is improved.

(2) When the adapter is not in position, external charging ports of the charging device include the port A, the port C, and the wireless charging port. When the adapter is not in position, the port C is a highest-priority charging port, the port A is a second-highest-priority charging port, the wireless charging port is a lowest-priority charging port, the port A and the wireless charging port are charging ports whose priorities are lower than the highest priority, and the wireless charging port is a charging port whose priority is lower than the second highest priority. A manner in which the available charging power of the charging device is allocated to the charging ports of the charging device may be as follows:
Maximum charging power supported by the port C is selected for the port C within a range of [P_{CMIN}, (P_{RMNG} - P_{WMIN} - P_{AMIN})];
maximum charging power supported by the port A is selected for the port A within a range of [P_{AMIN}, (P_{RMNG} - P_{CDST} - P_{WMIN})]; and
a maximum charging level supported by the wireless charging port is selected for the wireless charging port within a range of [P_{WMIN}, (P_{RMNG} -P_{CDST} - P_{ADST})], where
P_{CMIN} is minimum power required by the port C, P_{AMIN} is minimum power required by the port A, P_{WMIN} is minimum power required by the wireless charging port, P_{RMNG} is the available charging power of the charging device, [P_{CMIN}, (P_{RMNG} - P_{WMIN} - P_{AMIN})] is a first charging range, and P_{CDST} is finally allocated maximum charging power when the port C is used for external charging, namely, first charging power; [P_{AMIN}, (P_{RMNG} - P_{CDST} - P_{WMIN})] is a second charging range, and P_{ADST} is finally allocated maximum charging power when the port A is used for external charging, namely, second charging power; and [P_{WMIN}, (P_{RMNG} - P_{CDST} - P_{ADST})] is a third charging range, and when the wireless charging port is used for external charging, finally allocated maximum charging power is third charging power.

For example, when the adapter is not in position, the port C and the port A are used for external charging at the same time, and to be compatible with a 5 V/1 A adapter in the market, a specific power allocation manner may be shown in Table 2.

**Table 2**

| The adapter is not in position. (P_{BAT} = 30.4 W, P_{RSVD} = 2 W, and P_{RMNG} = 28.4 W) | | | |
|---|---|---|---|
| It is assumed that the port C is preferred. | External charging through the port C (supported charging levels: 9 V 2 A, 5 V/2 A, and 5 V/1 A) | External charging through the port A (supported charging levels: 5 V/4.5 A, 9 V 2 A, 5 V/2 A, and 5 V/1 A) | Effective power (W) output by the charging device |
| A predetermined rule (it is considered that the port C is preferred, and maximum power is negotiated for the port C.) | 9 V/2 A | 5 V/2 A | 28 |
| A power allocation result according to an existing predetermined rule (an electronic device connected to the port C does not support fast charging.) | 5 V/2 A | 5 V/2 A | 20 |
| A power allocation result in this application (the electronic device connected to the port C does not support fast charging.) | 5 V/2 A | Based on the power allocation manner in this application, maximum charging power supported by the port A is selected within a range of [5, 28.4 - 10]. In other words, 9 V/2 A, namely, 18 W, is selected as the maximum charging power in (5 V/4.5 A, 9 V 2 A, 5 V/2 A, 5 V/1 A). | 28 |

It can be learned from Table 2 that, according to an existing predetermined rule, the effective power that can be output by the charging device is 28 W. However, if the electronic device connected to the port C does not support fast charging, after power is allocated according to the existing predetermined rule, effective power actually output by the charging device is 20 W. However, after the power is allocated based on the method provided in this application, the effective power output by the charging device can still reach 28 W. Therefore, charging power of each charging port is adjusted based on a priority of each charging port of the charging device, so that external charging efficiency of the charging device is maximized, and charging efficiency of the charging device is improved.

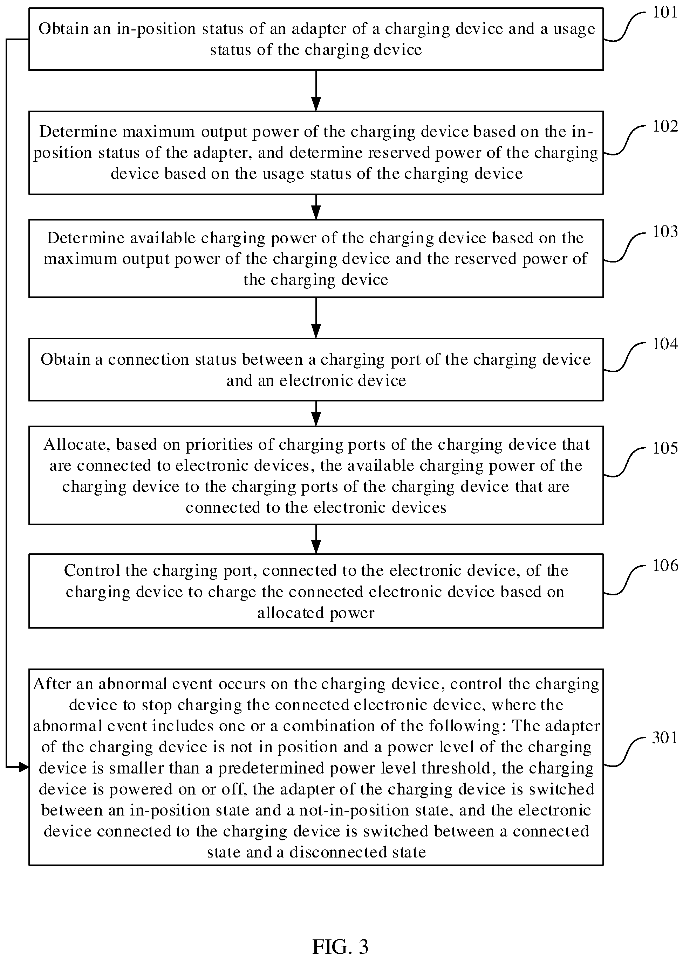

FIG. 3 is a flowchart of a charging method according to another embodiment of this application. As shown in FIG. 3, in the embodiment shown in FIG. 1 of this application, after step 101, the method may further include the following step:
Step 301: After an abnormal event occurs on the charging device, controlling the charging device to stop charging the connected electronic device, where the abnormal event includes one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

The predetermined power level threshold may be customized during a specific implementation, and a value of the predetermined power level threshold is not limited in this embodiment.

It may be understood that some or all of the steps or operations in the foregoing embodiments are merely examples. In the embodiments of this application, other operations or variations of various operations may be further performed. In addition, the steps may be performed in a sequence different from that presented in the foregoing embodiments, and not all the operations in the foregoing embodiments are necessarily performed.

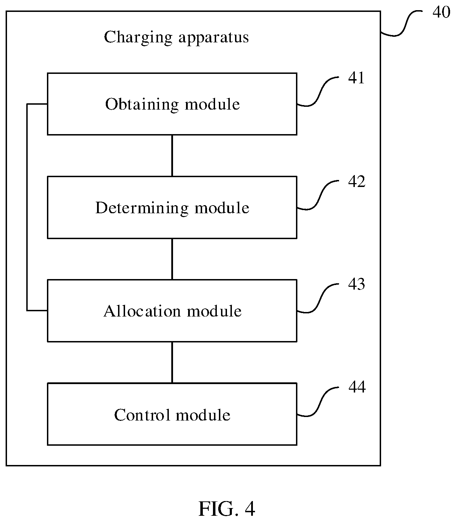

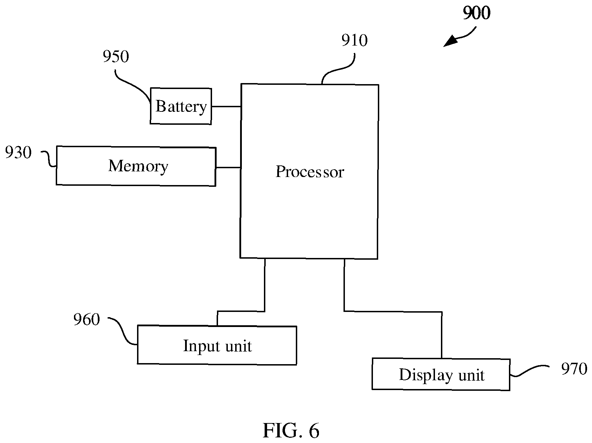

FIG. 4 is a schematic structural diagram of a charging apparatus according to an embodiment of this application. As shown in FIG. 4, the charging apparatus 40 may be disposed in a charging device, and the charging apparatus 40 may include an obtaining module 41, a determining module 42, an allocation module 43, and a control module 44. It should be understood that the charging apparatus 40 may be disposed in a charging device 900 shown in FIG. 6. Functions of the obtaining module 41, the determining module 42, the allocation module 43, and the control module 44 may be implemented by a processor 910 in the charging device 900 shown in FIG. 6.

The obtaining module 41 is configured to obtain an in-position status of an adapter of the charging device and a usage status of the charging device.

The determining module 42 is configured to: determine maximum output power of the charging device based on the in-position status of the adapter, determine reserved power of the charging device based on the usage status of the charging device, and determine available charging power of the charging device based on the maximum output power of the charging device and the reserved power of the charging device.

The obtaining module 41 is further configured to obtain a connection status between a charging port of the charging device and an electronic device.

The allocation module 43 is configured to allocate, based on priorities of charging ports, connected to electronic devices, of the charging device, the available charging power of the charging device to the charging ports, connected to the electronic devices, of the charging device.

The control module 44 is configured to control the charging port, connected to the electronic device, of the charging device to charge the connected electronic device based on allocated power.

In a possible implementation, the determining module 42 is specifically configured to: when the adapter is in position, determine that the maximum output power of the charging device is a sum of input power of the adapter and power provided by the charging device; and when the adapter is not in position, determine that the maximum output power of the charging device is the power provided by the charging device.

The charging apparatus provided in the embodiment shown in FIG. 4 may be configured to perform the technical solution in the method embodiment shown in FIG. 1 of this application. For an implementation principle and a technical effect of the charging apparatus, further refer to related descriptions in the method embodiment.

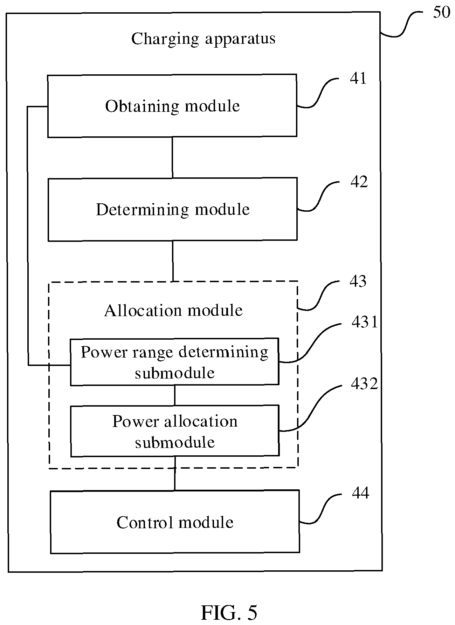

FIG. 5 is a schematic structural diagram of a charging apparatus according to another embodiment of this application. A difference between the charging apparatus 40 shown in FIG. 4 and the charging apparatus 50 shown in FIG. 5 lies in that an allocation module 43 may include a power range determining submodule 431 and a power allocation submodule 432, where
the power range determining submodule 431 is configured to determine a first power range based on minimum power required by a highest-priority charging port in charging ports, connected to electronic devices, of charging device, available charging power of the charging device, and minimum power required by a charging port whose priority is lower than a highest priority; and
the power allocation submodule 432 is configured to allocate first charging power in the first power range to the highest-priority charging port.

In a possible implementation, the power range determining submodule 431 is further configured to: after the power allocation submodule 432 allocates the first charging power in the first power range to the highest-priority charging port, determine a second power range based on minimum power required by a second-highest-priority charging port in the charging ports, connected to the electronic devices, of the charging device, the available charging power of the charging device, the first charging power, and minimum power required by a charging port whose priority is lower than the second highest priority; and
the power allocation submodule 432 is further configured to allocate second charging power in the second power range to the second-highest-priority charging port.

In a possible implementation, the power range determining submodule 431 is further configured to: after the power allocation submodule 432 allocates the second charging power in the second power range to the second-highest-priority charging port, determine a third power range based on minimum power required by a lowest-priority charging port in the charging ports, connected to the electronic devices, of the charging device, the available charging power of the charging device, the first charging power, and the second charging power; and
the power allocation submodule 432 is further configured to allocate third charging power in the third power range to the lowest-priority charging port.

In a possible implementation, a control module 44 is further configured to: after an obtaining module 41 obtains a usage status of the charging device, and an abnormal event occurs on the charging device, control the charging device to stop charging the connected electronic device, where the abnormal event includes one or a combination of the following: An adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

It should be understood that the charging apparatus 50 may be disposed in a charging device 900 shown in FIG. 6. Functions of the obtaining module 41, a determining module 42, the allocation module 43, and the control module 44 may be implemented by a processor 910 in the charging device 900 shown in FIG. 6.

The charging apparatus 50 provided in the embodiment shown in FIG. 5 may be configured to perform the technical solutions in the method embodiments shown in FIG. 1 to FIG. 3 of this application. For an implementation principle and a technical effect of the charging apparatus, further refer to related descriptions in the method embodiments.

It should be understood that division into the foregoing modules of the charging apparatus shown in FIG. 4 and FIG. 5 is merely logical function division. In an actual implementation, all or some modules may be integrated into one physical entity, or may be physically separated. In addition, all of the modules may be implemented in a form of software invoked by a processing element or in a form of hardware. Alternatively, some of the modules may be implemented in a form of software invoked by a processing element, and some of the modules may be implemented in a form of hardware. For example, the allocation module may be a separately disposed processing element, or may be integrated into a chip of a charging device, for example, a mobile power pack, for implementation. Implementations of other modules are similar to the implementation of the allocation module. In addition, all or some of these modules may be integrated together, or may be implemented independently. In an implementation process, steps in the foregoing methods or the foregoing modules can be implemented by using a hardware integrated logical circuit in a processor element, or by using instructions in a form of software.

For example, the foregoing modules may be configured as one or more integrated circuits for implementing the foregoing methods, for example, one or more application-specific integrated circuits (Application Specific Integrated Circuit, ASIC for short), one or more microprocessors (Digital Signal Processor, DSP for short), or one or more field programmable gate arrays (Field Programmable Gate Array, FPGA for short). For another example, these modules may be integrated together, and implemented in a form of a system-on-a-chip (System-On-a-Chip, SOC for short).

FIG. 6 is a schematic structural diagram of a charging device according to an embodiment of this application. The charging device may include one or more processors, a memory, a plurality of applications, and one or more computer programs, where the one or more computer programs are stored in the memory, the one or more computer programs include instructions, and when the instructions are executed by the device, the device is enabled to perform the following steps:
obtaining an in-position status of an adapter of the charging device and a usage status of the charging device;
determining maximum output power of the charging device based on the in-position status of the adapter, and determining reserved power of the charging device based on the usage status of the charging device;
determining available charging power of the charging device based on the maximum output power of the charging device and the reserved power of the charging device;
obtaining a connection status between a charging port of the charging device and an electronic device;
allocating, based on priorities of charging ports, connected to electronic devices, of the charging device, the available charging power of the charging device to the charging ports, connected to the electronic devices, of the charging device; and
controlling the charging port, connected to the electronic device, of the charging device to charge the connected electronic device based on allocated power.

In a possible implementation, when the instructions are executed by the device, that the device is enabled to perform the step of determining maximum output power of the charging device based on the in-position status of the adapter includes:
when the adapter is in position, determining that the maximum output power of the charging device is a sum of input power of the adapter and power provided by the charging device; and
when the adapter is not in position, determining that the maximum output power of the charging device is the power provided by the charging device.

In a possible implementation, when the instructions are executed by the device, that the device is enabled to perform the step of allocating, based on priorities of charging ports, connected to electronic devices, of the charging device, the available charging power of the charging device to the charging ports, connected to the electronic devices, of the charging device includes:
determining a first power range based on minimum power required by a highest-priority charging port in the charging ports, connected to the electronic devices, of the charging device, the available charging power of the charging device, and minimum power required by a charging port whose priority is lower than the highest priority; and
allocating first charging power in the first power range to the highest-priority charging port.

In a possible implementation, when the instructions are executed by the device, after the device enabled to perform the step of allocating first charging power in the first power range to the highest-priority charging port, the device further performs the following steps:
determining a second power range based on minimum power required by a second-highest-priority charging port in the charging ports, connected to the electronic devices, of the charging device, the available charging power of the charging device, the first charging power, and minimum power required by a charging port whose priority is lower than the second highest priority; and
allocating second charging power in the second power range to the second-highest-priority charging port.

In a possible implementation, when the instructions are executed by the device, after the device is enabled to perform the step of allocating second charging power in the second power range to the second-highest-priority charging port, the device further performs the following steps:
determining a third power range based on minimum power required by a lowest-priority charging port in the charging ports, connected to the electronic devices, of the charging device, the available charging power of the charging device, the first charging power, and the second charging power; and
allocating third charging power in the third power range to the lowest-priority charging port.

In a possible implementation, when the instructions are executed by the device, after the device is enabled to perform the step of obtaining a usage status of the charging device, the device further performs the following step:
after an abnormal event occurs on the charging device, controlling the charging device to stop charging the connected electronic device, where the abnormal event includes one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

The charging device shown in FIG. 6 may be a terminal device, or may be a circuit device built into the terminal device. The device may be configured to perform functions/steps in the methods provided in the embodiments shown in FIG. 1 to FIG. 3 of this application.

As shown in FIG. 6, the charging device 900 includes a processor 910 and a transceiver 920. Optionally, the charging device 900 may further include a memory 930. The processor 910, the transceiver 920, and the memory 930 may communicate with each other by using an internal connection path to transfer a control signal and/or a data signal. The memory 930 is configured to store a computer program. The processor 910 is configured to invoke the computer program from the memory 930 and run the computer program.

The processor 910 and the memory 930 may be integrated into one processing apparatus, or more commonly, components that are independent of each other. The processor 910 is configured to execute program code stored in the memory 930 to implement the foregoing functions. During a specific implementation, the memory 930 may also be integrated into the processor 910, or may be independent of the processor 910.

In addition, to improve a function of the charging device 900, the charging device 900 may further include one or more of an input unit 960, a display unit 970, and the like. The display unit 970 may include a display screen.

Optionally, the charging device 900 may further include a battery 950.

It should be understood that the charging device 900 shown in FIG. 6 can implement processes of the methods provided in the embodiments shown in FIG. 1 to FIG. 3. Operations and/or functions of the modules in the charging device 900 are respectively for implementing corresponding procedures in the foregoing method embodiments. For details, refer to the descriptions in the method embodiments shown in FIG. 1 to FIG. 3. To avoid repetition, detailed descriptions are properly omitted herein.

It should be understood that the processor 910 in the charging device 900 shown in FIG. 6 may be a system-on-a-chip SOC, and the processor 910 may include a central processing unit (Central Processing Unit, CPU for short), may further include another type of processor, for example, an image processing unit (Graphics Processing Unit, GPU for short).

In conclusion, the processors or processing units in the processor 910 may cooperate to implement the previous method procedures, and software programs corresponding to the processors or processing units may be stored in the memory 930.

The memory 930 may be a read-only memory (read-only memory, ROM), another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile optical disc, a Blu-ray disc, and the like), a magnetic disk storage medium or another magnetic storage device, any other medium that can be used to carry or store expected program code in a form of an instruction or a data structure and that can be accessed by a computer, or the like.

An embodiment of this application further provides a computer-readable storage medium. The computer-readable storage medium stores a computer program. When the computer program runs on a computer, the computer is enabled to perform the methods provided in the embodiments shown in FIG. 1 to FIG. 3 of this application.

An embodiment of this application further provides a computer program product. The computer program product includes a computer program. When the computer program runs on a computer, the computer is enabled to perform the methods provided in the embodiments shown in FIG. 1 to FIG. 3 in this application.

In the embodiments of this application, "at least one" means one or more, and "a plurality of" means two or more than two. The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following" or a similar expression thereof indicates any combination of the following, including any combination of one or more of the following. For example, at least one of a, b, and c may indicate a, b, c, a and b, a and c, b and c, or a, b, and c, where a, b, and c may be singular or plural.

A person of ordinary skill in the art may be aware that units, algorithms, and steps described in the embodiments disclosed in this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, if any function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A charging method, comprising:
obtaining an in-position status of an adapter of a charging device and a usage status of the charging device;
determining maximum output power of the charging device based on the in-position status of the adapter, and determining reserved power of the charging device based on the usage status of the charging device;
determining available charging power of the charging device based on the maximum output power of the charging device and the reserved power of the charging device;
obtaining a connection status between a charging port of the charging device and an electronic device;
allocating, based on priorities of charging ports, connected to electronic devices, of the charging device, the available charging power of the charging device to the charging ports, connected to the electronic devices, of the charging device; and
controlling the charging port, connected to the electronic device, of the charging device to charge the connected electronic device based on allocated power.

2. The method according to claim 1, wherein the determining maximum output power of the charging device based on the in-position status of the adapter comprises:
when the adapter is in position, determining that the maximum output power of the charging device is a sum of input power of the adapter and power provided by the charging device; and
when the adapter is not in position, determining that the maximum output power of the charging device is the power provided by the charging device.

3. The method according to claim 1 or 2, wherein the allocating, based on priorities of charging ports, connected to electronic devices, of the charging device, the available charging power of the charging device to the charging ports, connected to the electronic devices, of the charging device comprises:
determining a first power range based on minimum power required by a highest-priority charging port in the charging ports, connected to the electronic devices, of the charging device, the available charging power of the charging device, and minimum power required by a charging port whose priority is lower than the highest priority; and
allocating first charging power in the first power range to the highest-priority charging port.

4. The method according to claim 3, wherein after the allocating first charging power in the first power range to the highest-priority charging port, the method further comprises:
determining a second power range based on minimum power required by a second-highest-priority charging port in the charging ports, connected to the electronic devices, of the charging device, the available charging power of the charging device, the first charging power, and minimum power required by a charging port whose priority is lower than the second highest priority; and
allocating second charging power in the second power range to the second-highest-priority charging port.

5. The method according to claim 4, wherein after the allocating second charging power in the second power range to the second-highest-priority charging port, the method further comprises:
determining a third power range based on minimum power required by a lowest-priority charging port in the charging ports, connected to the electronic devices, of the charging device, the available charging power of the charging device, the first charging power, and the second charging power; and
allocating third charging power in the third power range to the lowest-priority charging port.

6. The method according to claim 1 or 2, wherein after the obtaining a usage status of the charging device, the method further comprises:
after an abnormal event occurs on the charging device, controlling the charging device to stop charging the connected electronic device, wherein the abnormal event comprises one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

7. A charging apparatus, disposed in a charging device, wherein the charging apparatus comprises:
an obtaining module, configured to obtain an in-position status of an adapter of the charging device and a usage status of the charging device;
a determining module, configured to: determine maximum output power of the charging device based on the in-position status of the adapter, determine reserved power of the charging device based on the usage status of the charging device, and determine available charging power of the charging device based on the maximum output power of the charging device and the reserved power of the charging device, wherein
the obtaining module is further configured to obtain a connection status between a charging port of the charging device and an electronic device;
an allocation module, configured to allocate, based on priorities of charging ports, connected to electronic devices, of the charging device, the available charging power of the charging device to the charging ports, connected to the electronic devices, of the charging device; and
a control module, configured to control the charging port, connected to the electronic device, of the charging device to charge the connected electronic device based on allocated power.

8. The apparatus according to claim 7, wherein
the determining module is specifically configured to: when the adapter is in position, determine that the maximum output power of the charging device is a sum of input power of the adapter and power provided by the charging device; and when the adapter is not in position, determine that the maximum output power of the charging device is the power provided by the charging device.

9. The apparatus according to claim 7 or 8, wherein the allocation module comprises:
a power range determining submodule, configured to determine a first power range based on minimum power required by a highest-priority charging port in the charging ports, connected to the electronic devices, of the charging device, the available charging power of the charging device, and minimum power required by a charging port whose priority is lower than the highest priority; and
a power allocation submodule, configured to allocate first charging power in the first power range to the highest-priority charging port.

10. The apparatus according to claim 9, wherein
the power range determining submodule is further configured to: after the power allocation submodule allocates the first charging power in the first power range to the highest-priority charging port, determine a second power range based on minimum power required by a second-highest-priority charging port in the charging ports, connected to the electronic devices, of the charging device of the charging device, the available charging power of the charging device, the first charging power, and minimum power required by a charging port whose priority is lower than the second highest priority; and
the power allocation submodule is further configured to allocate second charging power in the second power range to the second-highest-priority charging port.

11. The apparatus according to claim 10, wherein
the power range determining submodule is further configured to: after the power allocation submodule allocates the second charging power in the second power range to the second-highest-priority charging port, determine a third power range based on minimum power required by a lowest-priority charging port in the charging ports, connected to the electronic devices, of the charging device of the charging device, the available charging power of the charging device, the first charging power, and the second charging power; and
the power allocation submodule is further configured to allocate third charging power in the third power range to the lowest-priority charging port.

12. The apparatus according to claim 7 or 8, wherein
the control module is further configured to: after the obtaining module obtains the usage status of the charging device, and an abnormal event occurs on the charging device, control the charging device to stop charging the connected electronic device, wherein the abnormal event comprises one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

13. A charging device, comprising:
one or more processors, a memory, a plurality of applications, and one or more computer programs, wherein the one or more computer programs are stored in the memory, the one or more computer programs comprise instructions, and when the instructions are executed by the device, the device is enabled to perform the following steps:
obtaining an in-position status of an adapter of the charging device and a usage status of the charging device;
determining maximum output power of the charging device based on the in-position status of the adapter, and determining reserved power of the charging device based on the usage status of the charging device;
determining available charging power of the charging device based on the maximum output power of the charging device and the reserved power of the charging device;
obtaining a connection status between a charging port of the charging device and an electronic device;
allocating, based on priorities of charging ports, connected to electronic devices, of the charging device, the available charging power of the charging device to the charging ports, connected to the electronic devices, of the charging device; and
controlling the charging port, connected to the electronic device, of the charging device to charge the connected electronic device based on allocated power.

14. The device according to claim 13, wherein when the instructions are executed by the device, that the device is enabled to perform the step of determining maximum output power of the charging device based on the in-position status of the adapter comprises:
when the adapter is in position, determining that the maximum output power of the charging device is a sum of input power of the adapter and power provided by the charging device; and
when the adapter is not in position, determining that the maximum output power of the charging device is the power provided by the charging device.

15. The device according to claim 13 or 14, wherein when the instructions are executed by the device, that the device is enabled to perform the step of allocating, based on priorities of charging ports, connected to electronic devices, of the charging device, the available charging power of the charging device to the charging ports, connected to the electronic devices, of the charging device comprises:
determining a first power range based on minimum power required by a highest-priority charging port in the charging ports, connected to the electronic devices, of the charging device of the charging device, the available charging power of the charging device, and minimum power required by a charging port whose priority is lower than the highest priority; and
allocating first charging power in the first power range to the highest-priority charging port.

16. The device according to claim 15, wherein when the instructions are executed by the device, after the device is enabled to perform the step of allocating first charging power in the first power range to the charging port with the highest priority, the device further performs the following steps:
determining a second power range based on minimum power required by a second-highest-priority charging port in the charging ports, connected to the electronic devices, of the charging device of the charging device, the available charging power of the charging device, the first charging power, and minimum power required by a charging port whose priority is lower than the second highest priority; and
allocating second charging power in the second power range to the second-highest-priority charging port.

17. The device according to claim 16, wherein when the instructions are executed by the device, after the device is enabled to perform the step of allocating second charging power in the second power range to the second-highest-priority charging port, the device further performs the following steps:
determining a third power range based on minimum power required by a lowest-priority charging port in the charging ports, connected to the electronic devices, of the charging device of the charging device, the available charging power of the charging device, the first charging power, and the second charging power; and
allocating third charging power in the third power range to the lowest-priority charging port.

18. The device according to claim 13 or 14, wherein when the instructions are executed by the device, after the device is enabled to perform the step of obtaining a usage status of the charging device, the device further performs the following step:
after an abnormal event occurs on the charging device, controlling the charging device to stop charging the connected electronic device, wherein the abnormal event comprises one or a combination of the following: The adapter of the charging device is not in position and a power level of the charging device is smaller than a predetermined power level threshold, the charging device is powered on or off, the adapter of the charging device is switched between an in-position state and a not-in-position state, and the electronic device connected to the charging device is switched between a connection state and a disconnection state.

19. A computer-readable storage medium, wherein the computer-readable storage medium stores a computer program, and when the computer program runs on a computer, the computer is enabled to perform the method according to any one of claims 1 to 6.
